(19) Europäisches Patentamt
European Patent Office
Office européen des brevets

(11) EP 1 828 338 B1

(12) EUROPÄISCHE PATENTSCHRIFT

(45) Veröffentlichungstag und Bekanntmachung des Hinweises auf die Patenterteilung:
**17.06.2009 Patentblatt 2009/25**

(21) Anmeldenummer: **05816995.4**

(22) Anmeldetag: **02.12.2005**

(51) Int Cl.:
***C09J 7/02*** *(2006.01)* ***B32B 15/08*** *(2006.01)*

(86) Internationale Anmeldenummer:
**PCT/EP2005/056401**

(87) Internationale Veröffentlichungsnummer:
**WO 2006/058915 (08.06.2006 Gazette 2006/23)**

# (54) DOPPELSEITIGE HAFTKLEBEBÄNDER ZUR HERSTELLUNG VON LC-DISPLAYS MIT LICHTREFLEKTIERENDEN UND ABSORBIERENDEN EIGENSCHAFTEN

DOUBLE-SIDED CONTACT-ADHESIVE TAPE FOR PRODUCING LC DISPLAYS, HAVING LIGHT-REFLECTIVE AND LIGHT-ABSORBING PROPERTIES

RUBANS AUTO-ADHESIFS DOUBLES FACES, DOTES DE PROPRIETES REFLECHISSANT ET ABSORBANT LA LUMIERE, POUR REALISER DES AFFICHAGES A CRISTAUX LIQUIDES

(84) Benannte Vertragsstaaten:
**DE ES FR GB IT**

(30) Priorität: **02.12.2004 DE 102004058278**

(43) Veröffentlichungstag der Anmeldung:
**05.09.2007 Patentblatt 2007/36**

(73) Patentinhaber: **tesa SE**
**20253 Hamburg (DE)**

(72) Erfinder:
- **HUSEMANN, Marc**
  **22605 Hamburg (DE)**
- **STORBECK, Reinhard**
  **22457 Hamburg (DE)**

(56) Entgegenhaltungen:
**EP-A- 1 386 950**

- **PATENT ABSTRACTS OF JAPAN Bd. 2003, Nr. 12, 5. Dezember 2003 (2003-12-05) & JP 2004 184443 A (DAINIPPON INK & CHEM INC), 2. Juli 2004 (2004-07-02)**

EP 1 828 338 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft doppelseitige Haftklebebänder mit mehrschichtigen Trägeraufbauten und mit lichtreflektierenden und lichtabsorbierenden Eigenschaften zur Herstellung von Flüssigkristall-Datenanzeigen (Liquid Crystal Displays, LCDs).

Haftklebebänder sind im Zeitalter der Industrialisierung weitverbreitete Verarbeitungshilfsmittel. Insbesondere für den Einsatz in der Computerindustrie werden an Haftklebebänder sehr hohe Anforderungen gestellt. Neben einem geringen Ausgasungsverhalten sollten die Haftklebebänder in einem weiten Temperaturbereich einsetzbar sein und bestimmte optische Eigenschaften erfüllen.

Ein Einsatzgebiet sind LC-Displays, die für Computer, Fernsehgeräte, Laptops, PDA's, Mobiltelefone, Digitalkameras etc. benötigt werden. Ein sehr verbreiteter Typ eines LCD-Moduls für solche Anwendungen ist in Fig. 1 dargestellt.

Fig. 1 zeigt das Konzept für ein doppelseitiges Klebeband mit einer schwarzen Schicht zur Absorption und einer metallisch-silbernen Schicht zur Reflexion gemäß dem Stande der Technik; dabei bedeuten:

| | | | |
|---|---|---|---|
| 1 | LCD-Glas | 8 | Reflektionsfolie |
| 2 | doppelseitiges schwarz-silbemes Klebeband | 9 | LCD-Gehäuse |
| | | 10 | schwarze absorbierende Klebebandseite |
| 3 | Haftklebemasse | | |
| 4 | Lichtquelle (LED) | 11 | metallisch reflektierende Seite |
| 5 | Lichtstrahlen | 12 | sichtbarer Bereich |
| 6 | doppelseitiges Klebeband | 13 | "blinder" Bereich |
| 7 | Lichtleiter | | |

Zur Herstellung von LC-Displays werden LEDs (lichtemittierende Dioden) als Lichtquelle mit dem LCD-Modul verklebt. Hierfür werden in der Regel schwarze doppelseitige Haftklebebänder eingesetzt. Durch die schwarze Einfärbung soll erreicht werden, dass im Bereich des doppelseitigen Haftklebebandes kein Licht von innen nach außen und umgekehrt dringt.

Es existieren bereits viele Konzepte, solch eine Schwarzfärbung zu erreichen. Auf der anderen Seite möchte man die Lichteffizienz des rückseitigen Lichtmoduls erhöhen, so dass bevorzugt doppelseitige Klebebänder eingesetzt werden, die auf einer Seite schwarz sind (lichtabsorbierend) und auf der anderen Seite lichtreflektierend.

Zur Herstellung der schwarzen Seite existieren viele Konzepte.

Ein Konzept zur Herstellung von schwarzen d/s Haftklebebändern besteht in der Einfärbung der Trägermaterials. In der Elektronik-Industrie werden sehr bevorzugt doppelseitige Haftklebebänder mit Polyesterfilm- Trägern (PET) eingesetzt, da diese sich sehr gut stanzen lassen. Die PET-Träger kann man ebenfalls mit Ruß oder schwarzen Farbpigmenten einfärben, um eine Absorption des Lichtes zu erreichen. Der Nachteil dieses bestehenden Konzeptes ist die geringe Absorption des Lichtes. In sehr dünnen Trägerschichten lassen sich nur eine relativ geringe Anzahl Ruß- oder anderer schwarzer Pigmentpartikel einbringen mit der Folge, dass keine vollständige Absorption des Lichtes erreicht wird. Mit dem Auge und auch mit intensiveren Lichtquellen (Lichtstärke größer 600 Candela) kann dann die mangelnde Absorption ermittelt werden.

Ein weiteres Konzept zur Herstellung von schwarzen doppelseitigen Haftklebebändern betrifft die Herstellung eines zweischichtigen Trägermaterials mittels Coextrusion. Trägerfolien werden in der Regel über Extrusion hergestellt. Durch die Coextrusion wird neben dem konventionellen Trägermaterial eine zweite schwarze Schicht coextrudiert, die die Funktion der Lichtabsorption erfüllt. Auch dieses Konzept weist verschiedene Nachteile auf. Z. B. müssen für die Extrusion Antiblockmittel eingesetzt werden, die dann im Produkt zu den sogenannten Pinholes führen. Diese Pinholes sind optische Störstellen (Lichtdurchtritt an diesen Löchern) und beeinflussen negativ die Funktionsweise im LCD.

Ein weiteres Problem sind die Schichtdicken, da die zwei Schichten zunächst einzeln in der Düse ausgeformt werden und sich somit insgesamt nur relativ dicke Trägerschichten realisieren lassen, mit der Folge, dass die Folie relativ dick und unflexibel wird und sich somit an die zu verklebenden Flächen nur noch schlecht anpasst. Zudem muss die schwarze Schicht ebenfalls relativ dick sein, da ansonsten keine vollständige Absorption realisiert werden kann. Ein weiterer Nachteil besteht in den veränderten mechanischen Eigenschaften des Trägermaterials, da die schwarze Schicht andere mechanische Eigenschaften wie das ursprüngliche Trägermaterial (z. B. reines PET) aufweist. Ein weiterer Nachteil für die zweischichtige Version des Trägermaterials ist die unterschiedliche Verankerung der Klebemasse auf dem coextrudierten Trägermaterial. In diesem Fall ist eine Schwachstelle im doppelseitigen Klebeband enthalten.

In einem weiteren Konzept wird eine schwarze Farblackschicht auf das Trägermaterial beschichtet. Dies kann einseitig oder doppelseitig auf dem Träger erfolgen. Auch dieses Konzept weist verschiedene Nachteile auf. Zum einen entstehen auch hier leicht Fehlstellen (Pinholes), die durch Antiblockmittel während des Folienextrusionsprozesses

eingetragen werden. Diese sind für die Anwendung im LC-Display nicht akzeptabel. Weiterhin entsprechen die maximalen Absorptionseigenschaften nicht den Anforderungen, da nur relativ dünne Lackschichten aufgetragen werden können. Auch ist man in den Schichtdicken nach oben begrenzt, da sich ansonsten die mechanischen Eigenschaften des Trägermaterials verändern würden.

Bei der Entwicklung von LC-Displays entwickelt sich ein Trend. Zum einen sollen die LC-Displays leichter und flacher werden und es besteht ein stark steigender Bedarf für immer größer Displays mit immer höherer Auflösung. Aus diesem Grund wurde das Design der Displays geändert, und die Lichtquelle rückt entsprechend immer näher an das LCD-Panel, mit der Konsequenz, dass die Gefahr steigt, dass immer mehr Licht von außen in die Randzone des LCD-Panels eindringt ("blind area") (siehe Fig. 1). Mit dieser Entwicklung steigen somit auch die Anforderungen an die Abschattungseigenschaften (black out Eigenschaften) des doppelseitigen Klebebandes und es besteht somit der Bedarf nach neuen Konzepten zur Herstellung von schwarzen Klebebändern.

Auf der anderen Seite des doppelseitigen Klebebandes soll dieses reflektierend sein.

Dazu sind doppelseitige Haftklebebänder bekannt, die einen schwarzen Träger und auf einer Seite eine metallische Schicht besitzen (vgl. auch die Fig. 1 zum Konzept eines doppelseitigen Klebebandes mit einer schwarzen Schicht zur Absorption und einer metallischen Schicht zur Reflexion.
Mit diesen Haftklebebändern wurde im Hinblick auf Lichtreflektion auf der einen Seite und Absorption auf der gegenüber liegenden Seite eine deutliche Verbesserung erzielt, aber durch die Antiblockmittel in der Trägerschicht treten Unregelmäßigkeiten in der reflektierenden Seite auf.

Zur Erzielung einer reflektierenden Schicht kann die Haftklebemasse mit reflektierenden Partikeln versehen werden. Die erzielbaren reflektieren Eigenschaften sind aber nur relativ unzureichend.

In der JP 2002-350612 werden doppelseitige Klebebänder für LCD-Panels mit lichtschützenden Eigenschaften beschrieben. Die Funktion wird durch eine Metallschicht, die ein- oder beidseitig auf der Trägerfolie aufgetragen ist, erreicht, wobei die Trägerfolie zusätzlich noch eingefärbt sein kann. Die dort beschriebenen Klebebänder weisen aber nur diese Funktion auf und verbinden somit nicht die lichtabsorbierende Funktion auf der einen Seite und die lichtreflektierende Funktion auf der anderen Seite.

Auch in der JP 2002-023663 werden doppelseitige Klebebänder für LCO-Panels mit lichtschützenden Eigenschaften beschrieben. Auch hier wird die Funktion durch eine Metallschicht, die ein- oder beidseitig auf der Trägerfolie aufgetragen ist, erreicht.

Die JP 2004-184443 A zeigt unterschiedliche Klebebänder, unter denen auch solche sind, bei denen zwischen einer schwarz gefärbten schicht und einer weißen (Harz-)Schicht eine Metallschicht vorgesehen ist. nach außen hin erscheint ein soclhes klebeband mit einer schwarzen und einer weißen Seite.

Die EP 1 386 950 A offenbart ähnlich aufgebaute Klebebänder mit einer reflektierenden (hellen) und einer absorbierenden (dunklen) Seite. Es sind lediglich Ausführungsformen beschrieben, bei denen zwischen einer schwarzen Schicht und einer weißen Schicht eine silberfarbene, aber nicht metallische Schicht angeordnet ist. Das Klebeband erscheint daher ebenfalls nach außen als auf einer Seite weiß und auf der anderen Seite schwarz.

In der DE 102 43 215 A werden doppelseitige Klebebänder für LC-Displays mit lichtabsorbierenden Eigenschaften auf der einen Seite und lichtreflektierenden Eigenschaften auf der anderen Seite beschrieben. In dieser Schrift werden schwarz/silberne doppelseitige Haftklebebänder beschrieben. Eine transparente oder gefärbte Trägerfolie wird einseitig metallisiert und auf der anderen Seite schwarz eingefärbt. Auf diesem Weg werden bereits gute reflektierende Eigenschaften, aber noch mangelhafte absorbierende Eigenschaften erreicht, da noch Fehlstellen, z.B. in der Folie durch Antiblockmittel, nur überlackiert werden und somit das Licht an dieser Stelle (Pinholes) noch durchscheinen kann.

Für die Verklebung von LCD-Displays bzw. zu deren Herstellung besteht somit weiterhin der Bedarf für doppelseitige Haftklebebänder, welche die oben beschriebenen Mängel nicht oder nur in verminderter Weise aufweisen.

Aufgabe der Erfindung ist es daher, ein doppelseitiges Haftklebeband zur Verfügung zu stellen, welches die Pinholes vermeidet und in der Lage ist, Licht vollständig zu absorbieren, und welches eine verbesserte Reflexion von Licht aufweist.

Im Rahmen dieser Erfindung wurde überraschender Weise gefunden, dass sich solche Klebebänder durch schwarz gefärbte Massen herstellen lassen, insbesondere mittels speziellem Ruß. Insbesondere war es überraschend, dass sich mit sehr geringen Masseaufträgen bereits eine absolute Schwarzfärbung erzielen ließ, so dass das doppelseitige Klebeband keine Pinholes enthielt, unter Beibehaltung der klebtechnischen Eigenschaften und der Eignung zur Herstellung von LCD-Modulen. Die Erfindung betrifft somit Haftklebebänder, insbesondere zur Herstellung oder Verklebung von optischen Flüssigkristall-Datenanzeigen (LCDs), aufweisend eine Ober- und eine Unterseite, mit lichtreflektierenden Eigenschaften auf der Oberseite und lichtabsorbierenden Eigenschaften auf der Unterseite, weiterhin aufweisend eine Trägerfolie mit einer Ober- und einer Unterseite, wobei die Haftklebebänder beidseitig mit einer Haftklebeschicht ausgerüstet sind und die Haftklebeschicht auf der Unterseite des Haftklebebandes schwarz eingefärbt ist, wobei eine metallisch reflektierende Beschichtung auf der Oberseite der Trägerfolie vorgesehen ist und die Haftklebeschicht auf der Oberseite des Haftklebebandes transparent ist.

Insbesondere vorteilhaft ist es, wenn die Schwarzeinfärbung der Haftklebeschicht auf der Unterseite durch die

Anwesenheit von Ruß bewirkt wird.

Im folgenden werden besonders vorteilhafte Ausführungsformen der Erfindung dargestellt, ohne sich durch die Wahl der Beispiele unnötig in der Erfindung einschränken zu wollen.

In der Ausführungsform gemäß der Fig. 2 besteht das erfinderische Haftklebeband aus einer Trägerfolienschicht (a), einer metallisch reflektierenden Schicht (b), einer transparenten Haftklebemassen Schicht (c) auf derselben Klebebandseite, gesehen von der Trägerfolie, und einer schwarz gefärbten, insbesondere nicht transparenten mit Ruß gefärbten, Haftklebeschicht (c') auf der anderen Klebebandseite.

In einer weiteren bevorzugten Ausführungsform der Erfindung besitzt das erfinderische Haftklebeband den in Fig. 3 dargestellten Produktaufbau. Hier besteht das doppelseitige Haftklebeband aus einer Trägerfolie (a), zwei metallisch reflektierenden Schichten (b), einer transparenten Haftklebeschicht (c) und einer nicht transparenten mit Ruß gefärbten Haftklebeschicht (c').

Fig. 4 zeigt ein erfindungsgemäßes Haftklebeband, bestehend aus einer Trägerfolie (a), zwei metallisch reflektierenden Schichten (b), einer transparenten Haftklebeschicht (c), einer nicht transparenten mit Ruß gefärbten Haftklebeschicht (c') und einer schwarzfarbigen Lackschicht (d).

Für den in Fig. 5 dargestellten Fall besteht das erfindungsgemäße doppelseitige Haftklebeband aus einer Trägerfolie (a), einer metallisch reflektierenden Schichten (b), einer transparenten Haftklebeschicht (c), einer nicht transparenten mit Ruß gefärbten Haftklebeschicht (c') und einer schwarzfarbigen Lackschicht (d).

Die erfindungsgemäßen Haftklebebänder lassen sich weiter wie folgt charakterisieren:

Die Trägerfolie (a) ist bevorzugt zwischen 5 und 250 $\mu$m, mehr bevorzugt zwischen 8 und 50 $\mu$m, äußerst bevorzugt zwischen 12 und 36 $\mu$m dick und sehr bevorzugt transparent oder semitransparent oder gering lichtdurchlässig, z.B. durch ein Einfärbung. Die Schichten (b) sind metallisch glänzend und lichtreflektierend. Zur Erzeugung der Schichten (b) wird die Folie (a) mit einer silberfarbenen Lackierung ausgerüstet und/oder in einer bevorzugten Ausführung der Erfindung ein- oder beidseitig mit Metall bedampft, z.B. mit Aluminium oder Silber. Die Schichtdicke der Schichten (b) liegt bevorzugt zwischen 5 nm und 200 nm.

Die Haftklebemasseschichten (c) und (c') besitzen bevorzugt eine Dicke von jeweils 5 $\mu$1m bis 250 $\mu$m. Die einzelnen Schichten (b), (c), (c'), (d) und (d)' können sich innerhalb des doppelseitigen Haftklebebandes im Hinblick auf die Schichtdicke unterscheiden, so dass z.B. unterschiedlich dicke Haftklebemassenschichten aufgetragen werden können, es können jedoch auch einige oder alle der Schichten gleich dick ausgestaltet sein, so dass beispielsweise vorteilhaft auf beiden Seiten des Klebebandes auch gleich dicke Haftklebemassenschichten vorliegen können.

Die Schicht (d) ist eine schwarzfarbige Lackschicht, die jeweils bevorzugt eine Schichtdicke zwischen 0,01 und 5 $\mu$m aufweist.

**Trägerfolie (a)**

Als Folienträger können prinzipiell alle filmischen Polymerträger eingesetzt werden, insbesondere solche, die transparent sind. Die Transparenz ist besonders bevorzugt für die Ausführungsformen, bei welchen auf der Unterseite der Trägerfolie (also auf Seiten der schwarz gefärbten Haftklebemasse) eine metallisch reflektierende Schicht vorgesehen ist.

Es lassen sich z.B. (transparente oder nichttransparente) Polyethylen-, Polypropylen-, Polyimid-, Polyester-, Polyamid-, Polymethaaylat-, fluorierte Polymerfolien etc. einsetzen. In einer besonders bevorzugten Auslegung werden Polyesterfolien eingesetzt, besonders bevorzugt PET-Folien (Polyethylenterephthalat). Die Folien können entspannt vorliegen oder eine oder mehrere Vorzugsrichtungen aufweisen. Vorzugsrichtungen werden erzielt durch Streckung in einer oder in zwei Richtungen. Für den Herstellprozess von z.B. PET-Folien können Antiblockmittel, wie z.B. Siliciumdioxid, Kieselkreide oder Kreide, Zeolithe, zugesetzt werden.

Insbesondere sehr dünne PET-Folien, ganz besonders bis zu 12 $\mu$m dicke Folien, können hervorragend eingesetzt werden. Sie lassen sich sehr gut beidseitig mit Metall beschichten. Weiterhin sind die vorgenannten PET Folien hervorragend geeignet, da sie sehr gute klebtechnische Eigenschaften für das doppelseitige Klebeband zulassen, da hier die Folie sehr flexibel ist und sich gut den Oberflächenrauhigkeiten der zu verklebenden Substrate anpassen kann.

Zur Verbesserung der Verankerung der Lackschicht und/oder der Metallbedampfung werden die Folien bevorzugt vorbehandelt. Die Folien können geätzt sein (z.B. mit Trichloressigsäure oder Trifluoressigsäure), mit Corona oder Plasma vorbehandelt sein oder mit einem Primer (z.B. Saran) ausgestattet sein.

Des Weiteren kann ein gefärbtes oder semitransparentes Folienmaterial eingesetzt werden, wobei dann hier Farbpigmente oder farbtragende Partikel zum Folienmaterial hinzugegeben werden. So eignen sich z.B. Ruß zur Schwazfärbung und Titandioxidpartikel zur Weißfärbung der Folien. Die Pigmente oder Partikel sollten dann kleiner im Durchmesser sein als die letztendlich vorliegende Schichtdicke der Trägerfolie. Optimale Einfärbungen lassen sich mit 5 bis 40 Gew. % Partikelanteilen bezogen auf das Folienmaterial erzielen.

**Reflektierende Schicht (b)**

Für die Herstellung einer insbesondere hochreflektierenden Seite kann zum einen ein silberfarbener Lack auf die Folienschicht (a) aufgetragen werden und/oder die Folienschicht (a) einseitig oder beidseitig mit einem Metall, z.B. Aluminium oder Silber, bedampft werden. Für die Variante mit silberfarbenem Lack wird vorteilhaft eine Bindermatrix mit silbernen Farbpigmenten abgemischt. Als Bindermatrix eignen sich z.B. Polyurethane oder Polyester, die einen hohen Brechungsindex und eine hohe Transparenz aufweisen. Die Farbpigmente können aber auch in einer Polyacrylat- oder Polymethacrylatmatrix eingebunden werden und dann als Lack ausgehärtet werden.
In einer sehr bevorzugten Auslegung wird die Folienschicht (a) stattdessen oder zusätzlich einseitig oder beidseitig mit Aluminium oder Silber bedampft. Um besonders hervorragende reflektierende Eigenschaften zu erreichen, sollte der Sputterprozeß zur Bedampfung so gesteuert werden, dass das Aluminium oder Silber sehr gleichmäßig aufgetragen ist, um eine optimale Reflektion zu erzielen (Vermeidung von Streueffekten). Weiterhin wird in einer sehr bevorzugten Ausführung die plasmavorbehandelte PET-Folie in einem Arbeitschritt ein- oder beidseitig mit Aluminium bedampft.
Durch den Einsatz der reflektierenden Schicht (b) wird zum einen gezielt das Licht reflektiert und zum anderen die Transmission des Lichtes durch das Trägermaterial vermindert bzw. vermieden, zudem werden Oberflächenrauhigkeiten der Trägerfolie kompensiert.
Für den Herstellungsprozess kann es von Vorteil sein, wenn die reflektierende Seite vor der Beschichtung mit der Haftklebemasse durch einen Klarlack geschützt wird.

**Haftklebemassen (c) und (c')**

Die Haftklebemassen (c) und (c') auf beiden Seiten des Haftklebebandes sind in bevorzugter Weise unterschiedlich.
Generell lassen sich als Rohstoffbasis Haftklebemassensysteme basierend auf Acrylat-, Naturkautschuk-, Synthesekautschuk-, Silikon- oder EVA-Kleber einsetzen. Für den Fall, dass das doppelseitige erfinderische Haftklebeband auf zumindest einer Seite eine hohe Reflexion aufweisen muss, sollte die Haftklebemasse (c) eine hohe Transparenz aufweisen.
Prinzipiell lassen sich aber auch alle weiteren, dem Fachmann bekannten Haftklebemassen verarbeiten, wie sie z.B im "Handbook of Pressure Sensitive Adhesive Technology" von Donatas Satas (van Nostrand, New York 1989) aufgeführt sind.
Für (c) und (c') lassen sich beispielsweise Naturkautschukklebemassen einsetzen. Hier wird der Naturkautschuk bis zu einem Molekulargewicht (Gewichtsmittel) nicht unter etwa 100.000 Dalton, bevorzugt nicht unter 500.000 Dalton gemahlen und additiviert.
Bei Kautschuk/Synthesekautschuk als Ausgangsmaterial für den Kleber wind weite Variationsmöglichkeiten gegeben. Eingesetzt werden können Naturkautschuke oder Synthesekautschuke oder beliebige Blends aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.
Weiterhin vorzugsweise können Kautschuke zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil. Stellvertretend genannt seien an dieser Stelle vor allem die besonders verträglichen Styrol-Isopren-Styrol- (SIS) und Styrol-Butadien-Styrol (SBS) -Typen.
In einer erfinderisch bevorzugten Auslegung werden für (c) und (c') bevorzugt (Meth)acrylathaftklebemassen eingesetzt.
(Meth)Acrylathaftklebemassen, welche durch radikalische Polymerisation erhältlich sind, bestehen vorteilhaft zu mindestens 50 Gew.-% auf zumindest einem acrylischen Monomer aus der Gruppe der Verbindungen der folgenden allgemeinen Formel:

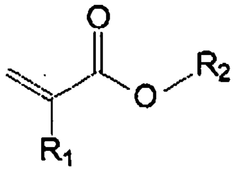

wobei $R_1$ = H oder $CH_3$ ist und der Rest $R_2$ = H oder $CH_3$ ist oder gewählt wird aus der Gruppe der verzweigten oder unverzweigten, gesättigten Alkylgruppen mit 1 - 30 Kohlenstoffatomen.

Die Monomere werden bevorzugt dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.

In einer weiteren erfinderischen Auslegung wird die Comonomerzusammensetzung derart gewählt, dass sich die Haftklebemassen als Hitze-aktivierbare Haftklebemassen einsetzen lassen.

Die Polymere lassen sich bevorzugt durch Polymerisation einer Monomermischung gewinnen, welche sich aus Acrylsäureestern und/oder Methacrylsäureestern und/oder deren freien Säuren mit der Formel $CH_2 = CH(R_1)(COOR_2)$ zusammensetzt, wobei $R_1$ = H oder $CH_3$ und $R_2$ eine Alkylkette mit 1-20 C-Atomen oder H ist.

Die Molmassen $M_w$ der eingesetzten Polyacrylate betragen bevorzugt $M_w \geq 200.000$ g/mol.

In einer sehr bevorzugten Weise werden Acryl- oder Methacrylmomonere eingesetzt, die aus Acryl- und Methacrylsäureester mit Alkylgruppen aus 4 bis 14 C-Atomen bestehen, bevorzugt 4 bis 9 C-Atomen umfassen. Spezifische Beispiele, ohne sich durch diese Aufzählung einschränken zu wollen, sind Methlacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, und deren verzweigten Isomere, wie z.B. Isobutylacrylat, 2-Ethylhexylacrylat, 2-Ethylhexylmethacrylat, Isooctylacrylat, Isooctylmethacrylat.

Weitere einzusetzende Verbindungsklassen sind monofunktionelle Acrylate bzw. Methacrylate von überbrückten Cycloalkylalkoholen, bestehend aus zumindestens 6 C-Atomen. Die Cycloalkylalkohole können auch substituiert sein, z.B. durch C-1-6-Alkylgruppen, Halogenatomen oder Cyanogruppen. Spezifische Beispiele sind Cyclohexylmethacrylate, Isobornylacrylat, Isobornylmethacrylate und 3,5-Dimethyladamantylacrylat.

In einer vorteilhaften Vorgehensweise werden Monomere eingesetzt, die polare Gruppen wie Carboxylreste, Sulfon- und Phosphonsäure, Hydroxyreste, Lactam und Lacton, N-substituiertes Amid, N-substituiertes Amin, Carbamat-, Epoxy-, Thiol-, Alkoxy-. Cyanreste, Ether oder ähnliches tragen.

Moderate basische Monomere sind z.B. N,N-Dialkylsubstituierte Amide, wie z.B. N,N-Dimethylacrylamid, N, N-Dimethylmethylmethacrylamid, N-tert.-Butylacrylamid, N-Vinylpyrrolidon, N-Vinyllactam, Dimethylaminoethylmethacrylat, Dimethylaminoethylacrylat, Diethylaminoethylmethaaylat, Diethylaminoethylacrylat, N-Methylolmethacrylamid, N-(Buthoxymethyl)methacrylamid, N-Methylolacrylamid, N-(Ethoxymethyl)acrylamid, N-Isopropylacrylamid, wobei diese Aufzählung nicht abschließend ist.

Weitere bevorzugte Beispiele sind Hydroxyethylacrylat, Hydroxypropylacrylat, Hydroxyethylmethacrylat, Hydroxypropylmethacrylat, Allylalkohol, Maleinsäureanhydrid, Itaconsäureanhydrid, Itaconsäure, Glyceridylmethacrylat, Phenoxyethylacrlylat, Phenoxyethylmethacrylat, 2-Butoxyethylmethacrylat, 2-Butoxyethylacrylat, Cyanoethylmethacrylat, Cyanoethylacrylat, Glycerylmethacrylat, 6-Hydroxyhexylmethacrylat, Vinylessigsäure, Tetrahydrofufurylacrlyat, β-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren sehr bevorzugten Vorgehensweise werden als Monomere Vinylester, Vinylether, Vinylhalogenide, Vinylidenhalogenide, Vinylverbindungen mit aromatischen Cyclen und Heterocyclen in $\alpha$-Stellung eingesetzt. Auch hier seien nicht ausschließlich einige Beispiele genannt: Vinylacetat, Vinylformamid, Vinylpyridin, Ethylvinylether, Vinylchlorid, Vinylidenchlorid und Acrylonitril.

Weiterhin werden in einer weiteren Vorgehensweise für die Haftklebemasse (c) Photoinitiatoren mit einer copolymerisierbaren Doppelbindung eingesetzt. Als Photoinitiatoren sind Norrish-I- und -II-Photoinitiatoren geeignet. Beispiele sind z.B. Benzoinacrylat und ein acryliertes Benzophenon der Fa. UCB (Ebecryl P 36®). Im Prinzip können alle dem Fachmann bekannten Photoinitiatoren copolymerisiert werden, die das Polymer über einen Radikalmechnismus unter UV-Bestrahlung vernetzen können. Ein Überblick über mögliche einsetzbare Photoinitiatoren die mit einer Doppelbindung funktionalisiert werden können, wird in Fouassier: "Photoinititation, Photopolymerization and Photocuring: Fundamentals and Applications", Hanser-Verlag, München 1995, gegeben. Ergänzend wird Carroy et al. in "Chemistry and Technology of UV and EB Formulation for Coatings, Inks and Paints", Oldring (Hrsg.), 1994, SITA, London eingesetzt.

In einer weiteren bevorzugten Vorgehensweise werden zu den beschriebenen Comonomeren Monomere hinzugesetzt, die eine hohe statische Glasübergangstemperatur besitzen. Als Komponenten eigenen sich aromatische Vinylverbindungen, wie z.B. Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethaaylat, 4-Biphenylacrylat und -methacrylat, 2-Naphthylacrylat und -methacrylat sowie Mischungen aus denjenigen Monomeren, wobei diese Aufzählung nicht abschließend ist.

Durch die Erhöhung des aromatischen Anteils steigt der Brechungsindex der Haftklebemasse an und die Streuung zwischen LCD-Glas und Haftklebemasse durch z.B. Fremdlicht wird minimiert.

Zur Weiterentwicklung können den Haftklebemassen Harze beigemischt sein. Als zuzusetzende klebrigmachende Harze sind die vorbekannten und in der Literatur beschriebenen Klebharze einsetzbar. Genannt seien stellvertretend die Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze. Beliebige Kombinationen dieser und weiterer Harze können eingesetzt werden, um die Eigenschaften der resultierenden Klebmasse wunschgemäß einzustellen. Im allgemeinen lassen sich alle mit dem entsprechenden Polyacrylat kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. Auf die Darstellung des Wissensstandes im "Handbook of Pressure Sensitive Adhesive Technology" von Donatas Satas (van Nostrand, 1989) sei ausdrücklich hingewiesen.

Auch hier werden zur Verbesserung der Transparenz der Haftklebemasse (c) bevorzugt transparente und sehr gut mit dem Polymer verträgliche Harze eingesetzt. Hydrierte oder teilhydrierte Harze weisen häufig diese Eigenschaften auf.

Weiterhin können optional für die Weichmacher (Plastifizierungsmittel), weitere Füllstoffe (wie. z. B. Fasern, Ruß, Zinkoxid, Kreide, Voll- oder Hohlglaskugeln, Mikrokugeln aus anderen Materialien, Kieselsäure, Silikate), Keimbildner, elektrisch leitfähige Materialien, wie z.B. konjugierte Polymere, dotierte konjugierte Polymere, Metallpigmente, Metallpartikel, Metallsalze, Graphit, etc., Blähmittel, Compoundierungsmittel und/oder Alterungsschutzmittel, z.B. in Form von primären und sekundären Antioxidantien oder in Form von Lichtschutzmitteln zugesetzt sein. Für die Haftklebemasse (c) dürfen solche Additive nur in Mengen zugegeben werden, die die Reflexion der metallischen Schicht nicht beeinflussen.

In einer weiteren Variante der Erfindung unterscheiden sich die Haftklebemassen (c) und (c') lediglich im schwarzen Partikelzusatz unterscheiden. So enthält die Haftklebemasse (c') bevorzugt zwischen 2 und 30 Gew.-% Ruß, mehr bevorzugt zwischen 5 und 20 Gew.% Ruß und äußerst bevorzugt zwischen 8 und 15 Gew.% Ruß. Der Ruß hat eine lichtabsorbierende Funktion. Als hervorragend geeignet haben sich Pigmentruße gezeigt. In einer bevorzugten Ausführung werden Rußpulver der Firma Degussa eingesetzt. Diese sind unter dem Handelsnamen Printex™ kommerziell erhältlich. Zur besseren Dispergierbarkeit in die Haftklebemasse werden besonders bevorzugt oxidativ nachbehandelte Ruße eingesetzt. Weiterhin kann es für die Haftklebemasse (c') von Vorteil sein, wenn neben Ruß Farbpigmente hinzugesetzt werden. So eignen sich als Zusätze z.B. Blaupigmente, wie z.B. Anilinschwarz BS890 der Firma Degussa. Weiterhin lassen sich als Zusätze noch Mattierungsmittel einsetzen.

In einer weiteren vorteilhaften Ausführungsform der Erfindung unterscheiden sich die Haftklebemasse (c) und (c') sich nicht nur im schwarzen Partikelzusatz, sondern auch in ihrer chemischen Zusammensetzung. So lassen sich z.B unterschiedliche Polyacrylate als Basismasse einsetzen, die sich in den Comonomeren und/oder in der Additivierung unterscheiden. Weiterhin lassen sich auch vorteilhaft für die Schicht (c') z.B. Naturkautschuk oder Synthesekautschukklebemassen einsetzen und diese mit einer transparenten Acrylathaftklebemasse (c) kombinieren. Für diese Ausführungsformen enthält die Haftklebemasse (c') ebenfalls bevorzugt zwischen 2 und 30 Gew.-% Ruß, mehr bevorzugt zwischen 5 und 20 Gew.-% Ruß und äußerst bevorzugt zwischen 8 und 15 Gew.-% Ruß. Die im vorstehenden Anschnitt genannten speziellen Ruße und/oder Farbpigmente sind hier ebenfalls sehr vorteilhaft.

Zusätzlich können Vernetzer und Promotoren den Haftklebemassen (c) und/oder (c') zur Vernetzung beigemischt werden. Geeignete Vernetzer für die Elektronenstrahlvernetzung und UV-Vemetzung sind beispielsweise bi- oder multifunktionelle Acrylate, bi- oder multifunktionelle Isocyanate (auch in blockierter Form) oder bi- oder multifunktionelle Epoxide. Weiterhin können auch thermisch aktivierbare Vernetzer, wie z.B. Lewis-Säure, Metallchelate oder multifunktionelle Isocyanate zugesetzt sein.

Zu einer optionalen Vernetzung mit UV-Licht können den Haftklebemassen (c) und/oder (c') insbesondere UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte $\alpha$-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish-I oder Norrish-II können vorteilhaft folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

**Herstellverfahren für die Acrylathaftklebemassen**

Zur Polymerisation werden die Monomere vorteilhaft dermaßen gewählt, dass die resultierenden Polymere bei Raumtemperatur oder höheren Temperaturen als Haftklebemassen eingesetzt werden können, insbesondere derart, dass die resultierenden Polymere haftklebende Eigenschaften entsprechend des "Handbook of Pressure Sensitive Adhesive Technology" von Donatas Satas (van Nostrand, New York 1989) besitzen.
Zur Erzielung einer für Haftklebemassen bevorzugten Glasübergangstemperatur $T_G$ der Polymere von $T_G \leq 25$ °C werden entsprechend dem vorstehend gesagten die Monomere sehr bevorzugt derart ausgesucht und die mengenmäßige Zusammensetzung der Monomermischung vorteilhaft derart gewählt, dass sich nach einer Gleichung (G1) analog zur Fox-Gleichung (G1) (vgl. T.G. Fox, Bull. Am. Phys. Soc. 1 (1956) 123) der gewünschte $T_G$-Wert für das Polymer ergibt.

$$\frac{1}{T_G} = \sum_n \frac{w_n}{T_{G,n}} \qquad \text{(G1)}$$

Hierin repräsentiert n die Laufzahl über die eingesetzten Monomere, $w_n$ den Massenanteil des jeweiligen Monomers n (Gew.-%) und $T_{G,n}$ die jeweilige Glasübergangstemperatur des Homopolymers aus den jeweiligen Monomeren n in K.

Zur Herstellung der Poly(meth)acrylathaftklebemassen werden vorteilhaft konventionelle radikalische Polymerisationen durchgeführt. Für die radikalisch verlaufenden Polymerisationen werden bevorzugt Initiatorsysteme eingesetzt, die zusätzlich weitere radikalische Initiatoren zur Polymerisation enthalten, insbesondere thermisch zerfallende radikalbildende Azo- oder Peroxo-Initiatoren. Prinzipiell eignen sich jedoch alle für Acrylate dem Fachmann geläufigen, üblichen Initiatoren. Die Produktion von C-zentrierten Radikalen ist im Houben Weyl, Methoden der Organischen Chemie, Vol. E 19a, S. 60 - 147 beschrieben. Diese Methoden werden in bevorzugter Weise in Analogie angewendet.
Beispiele für Radikalquellen sind Peroxide, Hydroperoxide und Azoverbindungen, als einige nicht ausschließliche Beispiele für typische Radikalinitiatoren seien hier genannt Kaliumperoxodisulfat, Dibenzoylperoxid, Cumolhydroperoxid, Cyclohexanonperoxid, Di-t-butylperoxid, Azodiisosäurebutyronitril, Cyclohexylsulfonylacetylperoxid, Diisopropylpercarbonat, t-Butylperoktoat, Benzpinacol. In einer sehr bevorzugten Auslegung wird als radikalischer Initiator 1,1'-Azo-bis-(cyclohexancarbonsäurenitril) (Vazo 88™ der Fa. DuPont) oder Azodisobutyronitril (AIBN) verwendet.

Die mittleren Molekulargewichte $M_w$ der bei der radikalischen Polymerisation entstehenden Haftklebemassen werden sehr bevorzugt derart gewählt, dass sie in einem Bereich von 200.000 bis 4.000.000 g/mol liegen; insbesondere werden Haftklebemassen mit mittleren Molekulargewichten $M_w$ von 400.000 bis 1.400.000 g/mol hergestellt. Die Bestimmung des mittleren Molekulargewichtes erfolgt über Größenausschlusschromatographie (GPC) oder Matrix-unterstützte Laser-Desorption/Ionisations-Massenspektrometrie (MALDI-MS).

Die Polymerisation kann in Substanz, in Gegenwart eines oder mehrerer organischer Lösungsmittel, in Gegenwart von Wasser oder in Gemischen aus organischen Lösungsmitteln und Wasser durchgeführt werden. Es wird dabei angestrebt, die verwendete Lösungsmittelmenge so gering wie möglich zu halten. Geeignete organische Lösungsmittel sind reine Alkane (z.B. Hexan, Heptan, Octan, Isooctan), aromatische Kohlenwasserstoffe (z.B. Benzol, Toluol, Xylol), Ester (z.B. Essigsäureethylester, Essigsäurepropyl-, -butyl- oder -hexylester), halogenierte Kohlenwasserstoffe (z.B. Chlorbenzol), Alkanole (z.B. Methanol, Ethanol; Ethylenglycol, Ethylenglycolmonomethylether) und Ether (z.B. Diethylether, Dibutylether) oder Gemische davon. Die wässrigen Polymerisationsreaktionen können mit einem mit Wasser mischbaren oder hydrophilen Colösungsmittel versetzt werden, um zu gewährleisten, dass das Reaktionsgemisch während des Monomerumsatzes in Form einer homogenen Phase vorliegt. Vorteilhaft verwendbare Colösungsmittel für die vorliegende Erfindung werden gewählt aus der folgenden Gruppe, bestehend aus aliphatischen Alkoholen, Glycolen, Ethern, Glycolethern, Pyrrolidinen, N-Alkylpyrrolidinonen, N-Alkylpyrrolidonen, Polyethylenglycolen, Polypropylenglycolen, Amiden, Carbonsäuren und Salzen davon, Estern, Organosulfiden, Sulfoxiden, Sulfonen, Alkoholderivaten, Hydroxyetherderivaten, Aminoalkoholen, Ketonen und dergleichen, sowie Derivaten und Gemischen davon.

Die Polymerisationszeit beträgt - je nach Umsatz und Temperatur - zwischen 2 und 72 Stunden. Je höher die Reaktionstemperatur gewählt werden kann, das heißt, je höher die thermische Stabilität des Reaktionsgemisches ist, desto geringer kann die Reaktionsdauer gewählt werden.

Zur Initiierung der Polymerisation ist für die thermisch zerfallenden Initiatoren der Eintrag von Wärme essentiell. Die Polymerisation kann für die thermisch zerfallenden Initiatoren durch Erwärmen auf 50 bis 160 °C, je nach Initiatortyp, initiiert werden.

Für die Herstellung kann es auch von Vorteil sein, die (Meth)acrylathaftklebemassen in Substanz zu polymerisieren. Hier eignet sich insbesondere die Präpolymerisationstechnik. Die Polymerisation wird mit UV-Licht iniitiert, aber

nur zu einem geringen Umsatz ca. 10 - 30 % geführt. Anschließend kann dieser Polymersirup z.B. in Folien eingeschweißt werden (im einfachsten Fall Eiswürfel) und dann in Wasser zu hohem Umsatz durchpolymerisiert. Diese Pellets lassen sich dann als Acrylatschmelzkleber einsetzen, wobei für den Aufschmelzvorgang besonders bevorzugt Folienmaterialien eingesetzt werden, die mit dem Polyacrylat kompatibel sind. Auch für diese Präparationsmethode lassen sich die thermisch-leitfähigen Materialzusätze vor oder nach der Polymerisation zusetzen.

Ein anderes vorteilhaftes Herstellungsverfahren für die Poly(meth)acrylathaftklebemassen ist die anionische Polymerisation. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.

Das lebende Polymer wird in diesem Fall im allgemeinen durch die Struktur $P_L$(A)-Me repräsentiert, wobei Me ein Metall der Gruppe I, wie z.B. Lithium, Natrium oder Kalium, und $P_L$(A) ein wachsendes Polymer aus den Acrylatmonomeren ist. Die Molmasse des herzustellenden Polymers wird durch das Verhältnis von Initiatorkonzentration zu Monomerkonzentration kontrolliert. Als geeignete Polymerisationsinitiatoren eignen sich z.B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Poly(meth)acrylathaftklebemassen mit einer engen Molekulargewichtsverteilung eignen sich auch kontrollierte radikalische Polymerisationsmethoden. Zur Polymerisation wird dann bevorzugt ein Kontrollreagenz der allgemeinen Formel eingesetzt:

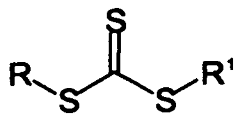

(I)

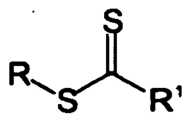

(II)

worin R und $R^1$ unabhängig voneinander gewählt oder gleich sind und

- verzweigte und unverzweigte $C_1$- bis $C_{18}$-Alkylreste; $C_3$- bis $C_{18}$-Alkenylreste; $C_3$- bis $C_{18}$-Alkinylreste;
- $C_1$- bis $C_{18}$-Alkxoyreste
- durch zumindest eine OH-Gruppe oder ein Halogenatom oder einen Silylether substituierte $C_1$- bis $C_{18}$-Alkylreste; $C_3$- bis $C_{18}$-Alkenylreste; $C_3$- bis $C_{18}$-Alkinylreste;
- $C_2$-$C_{18}$-Hetero-Alkylreste mit mindestens einem O-Atom und/oder einer NR*-Gruppe in der Kohlenstoffkette, wobei R* ein beliebiger (insbesondere organischer) Rest sein kann,
- mit zumindest einer Estergruppe, Amingruppe, Carbonatgruppe, Cyanogruppe, Isocyanogruppe und/oder Epoxidgruppe und/oder mit Schwefel substituierte $C_1$-$C_{18}$-Alkylreste, $C_3$-$C_{18}$-Alkenylreste, $C_3$-$C_{18}$-Alkinylreste;
- $C_3$-$C_{12}$-Cycloalkylreste
- $C_6$-$C_{18}$- Aryl- oder Benzylreste
- Wasserstoff

darstellen.

Kontrollreagenzien des Typs (I) bestehen bevorzugt aus folgenden Verbindungen:

Halogenatome sind hierbei bevorzugt F, Cl, Br oder **I,** mehr bevorzugt Cl und Br. Als Alkyl-, Alkenyl- und Alkinylreste in den verschiedenen Substituenten eignen sich hervorragend sowohl lineare als auch verzweigte Ketten.

Beispiele für Alkylreste, welche 1 bis 18 Kohlenstoffatome enthalten, sind Methyl, Ethyl, Propyl, Isopropyl, Butyl, Isobutyl, t-Butyl, Pentyl, 2-Pentyl, Hexyl, Heptyl, Octyl, 2-Ethylhexyl, t-Octyl, Nonyl, Decyl, Undecyl, Tridecyl, Tetradecyl, Hexadecyl und Octadecyl.

Beispiele für Alkenylreste mit 3 bis 18 Kohlenstoffatomen sind Propenyl, 2-Butenyl, 3-Butenyl, Isobutenyl, n-2,4-Pentadienyl, 3-Methyl-2-butenyl, n-2-Octenyl, n-2-Dodecenyl, Isododecenyl und Oleyl.
Beispiele für Alkinyl mit 3 bis 18 Kohlenstoffatomen sind Propinyl, 2-Butinyl, 3-Butinyl, n-2-Octinyl und n-2-Octadecinyl.
Beispiele für Hydroxy-substituierte Alkylreste sind Hydroxypropyl, Hydroxybutyl oder Hydroxyhexyl.
Beispiele für Halogen-substituierte Alkylreste sind Dichlorobutyl, Monobromobutyl oder Trichlorohexyl.
Ein geeigneter $C_2$-$C_{18}$-Hetero-Alkylrest mit mindestens einem O-Atom in der Kohlenstoffkette ist beispielsweise $-CH_2-CH_2-O-CH_2-CH_3$.
Als $C_3$-$C_{12}$-Cycloalkylreste dienen beispielsweise Cyclopropyl, Cyclopentyl, Cyclohexyl oder Trimethylcyclohexyl.
Als $C_6$-$C_{18}$-Arylreste dienen beispielsweise Phenyl, Naphthyl, Benzyl, 4-tert.-Butylbenzyl- oder weitere substituierte Phenyl, wie z.B. Ethyl, Toluol, Xylol, Mesitylen, Isopropylbenzol, Dichlorobenzol oder Bromtoluol.
Die vorstehenden Auflistungen dienen nur als Beispiele für die jeweiligen Verbindungsgruppen und besitzen keinen Anspruch auf Vollständigkeit.

Weiterhin sind auch Verbindungen der folgenden Typen als Kontrollreagenzien einsetzbar

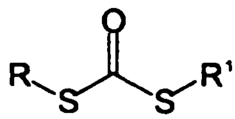

(III)

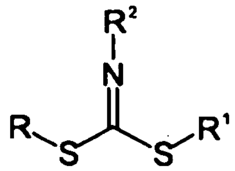

(IV)

wobei $R^2$ ebenfalls unabhängig von R und $R^1$ aus der oben aufgeführten Gruppe für diese Reste gewählt werden kann.

Beim konventionellen 'RAFT-Prozeß' wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflusst, die Restmonomere im Aufkonzentrationsprozess das Lösemittelrecyclat verunreinigen und die entsprechenden Selbstklebebänder ein sehr hohes Ausgasungsverhalten zeigen würden. Um diesen Nachteil niedriger Umsätze zu umgehen, wird in einer besonders bevorzugten Vorgehensweise die Polymerisation mehrfach initiiert.

Als weitere kontrollierte radikalische Polymerisationsmethode können Nitroxid-gesteuerte Polymerisationen durchgeführt werden. Zur Radikalstabilisierung werden in günstiger Vorgehensweise Nitroxide des Typs (Va) oder (Vb) eingesetzt:

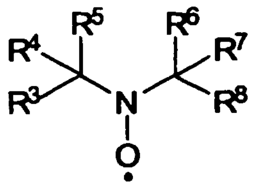

(Va)

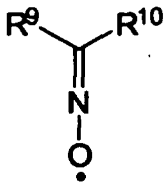

(Vb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester-$COOR^{11}$, Alkoxide-$OR^{12}$ und/oder Phosphonate $-PO(OR^{13})_2$, wobei $R^{11}$, $R^{12}$ oder $R^{13}$ für Reste aus der Gruppe ii) stehen.

Verbindungen der (Va) oder (Vb) können auch an Polymerketten jeglicher Art gebunden sein (vorrangig in dem Sinne, dass zumindest einer der oben genannten Reste eine derartige Polymerkette darstellt) und somit zum Aufbau von Polyacrylathaftklebemassen genutzt werden.
Mehr bevorzugt werden kontrollierte Regler für die Polymerisation von Verbindungen des Typs gewählt:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-piperidin-1-oxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

Eine Reihe weiterer Polymerisationsmethoden, nach denen die Haftklebemassen in alternativer Vorgehensweise hergestellt werden können, lassen sich aus dem Stand der Technik wählen:

US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).

Als weitere kontrollierte Polymerisationsmethode läßt sich in vorteilhafter Weise zur Synthese der Polyacrylathaftklebemassen die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.

## Beschichtungsverfahren, Ausrüstung des Trägermaterials

Zur Herstellung wird in einer bevorzugten Vorgehensweise die Haftklebemasse aus Lösung auf das Trägermaterial beschichtet. Zur Steigerung der Verankerung der Haftklebemasse können optional die Schichten (a) und/oder (b) vorbehandelt werden. So kann z.B. mit Corona oder mit Plasma vorbehandelt werden, es kann aus der Schmelze oder aus Lösung ein Primer aufgetragen werden oder es kann chemisch geätzt werden.
Für die Beschichtung der Haftklebemasse aus Lösung wird über Wärmezufuhr z.B. in einem Trockenkanal das Lösemittel entfernt und gegebenenfalls die Vernetzungsreaktion initiiert.
Die oben beschriebenen Polymere können weiterhin auch als Hotmelt-Systeme (also aus der Schmelze) beschichtet werden. Für das Herstellungsverfahren kann es daher erforderlich sein, das Lösemittel von der Haftklebemasse zu entfernen. Hier können im Prinzip alle dem Fachmann bekannten Verfahren eingesetzt werden. Ein sehr bevorzugtes Verfahren ist die Aufkonzentration über einen Ein- oder Doppelschneckenextruder. Der Doppelschneckenextruder kann gleich- oder gegenläufig betrieben werden. Das Lösemittel oder Wasser wird bevorzugt über mehrere Vakuumstufen abdestilliert. Zudem wird je nach Destillationstemperatur des Lösemittels gegengeheizt. Die Restlösemittelanteile betragen bevorzugt < 1 %, mehr bevorzugt < 0,5 % und sehr bevorzugt < 0,2 %.
Weiterhin kann der Doppelschneckenextruder auch zum Kompoundieren mit dem Ruß genutzt werden. Auf diesem Weg lässt sich der Ruß sehr fein verteilt in der Haftklebematrix verteilen.

Der Hotmelt wird sehr bevorzugt aus der Schmelze weiterverarbeitet.

Zur Beschichtung als Hotmelt können unterschiedliche Beschichtungsverfahren herangezogen werden. In einer Ausführung werden die Haftklebemassen über ein Walzenbeschichtungsverfahren beschichtet. Unterschiedliche Walzenbeschichtungsverfahren sind im "Handbook of Pressure Sensitive Adhesive Technology" von Donatas Satas (van Nostrand, New York 1989) beschrieben. In einer weiteren Ausführung wird über eine Schmelzdüse beschichtet. In einem weiteren bevorzugten Verfahren wird durch Extrusion beschichtet. Die Extrusionsbeschichtung wird bevorzugt mit einer Extrusionsdüse vorgenommen. Die verwendeten Extrusionsdüsen können vorteilhaft aus einer der drei folgenden Kategorien stammen: T-Düse, Fischschwanz-Düse und Bügel-Düse. Die einzelnen Typen unterscheiden sich durch die Gestalt ihres Fließkanals.
Durch die Beschichtung können die Haftklebemassen auch eine Orientierung erfahren.

Weiterhin kann es erforderlich sein, dass die Haftklebemasse vernetzt wird. In einer bevorzugten Ausführung wird mit Elektronen- und/oder UV-Strahlung vernetzt.

Zur UV-Vernetzung wird mittels kurzwelliger ultravioletter Bestrahlung in einem Wellenlängenbereich von 200 bis 400 nm, je nach verwendetem UV-Photoinitiator, bestrahlt, insbesondere unter Verwendung von Quecksilber-Hochdruck- oder -Mitteldruck-Lampen bei einer Leistung von 80 bis 240 W/cm. Die Bestrahlungsintensität wird der jeweiligen Quantenausbeute des UV-Photoinitiators und dem einzustellenden Vernetzungsgrad angepasst.

Weiterhin ist es in einer Auslegung möglich, die Haftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhome, Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.
Es können auch beide Vemetzungsverfahren angewendet werden oder andere Verfahren, die hochenergetische Bestrahlung ermöglichen.

## Farbschichten (d)

Die Farbschicht (d) kann in bevorzugter Ausführungsform der Erfindung zur Funktion der (weitgehend) vollständigen Absorption des Außenlichtes beitragen. Daher liegt in diesem Fall für das doppelseitige Haftklebeband die Transmission bevorzugt in einem Wellenlängenbereich von 300 - 800 nm bei < 0,5 %, mehr bevorzugt bei < 0,1 %, äußerst bevorzugt bei < 0,01 %. Insbesondere vorteilhaft wird dies mit einer schwarzen Lackschicht erreicht. In einer aushärtenden Bindermatrix (bevorzugt thermisch aushärtendes System, aber auch strahlenhärtendes System möglich) werden schwarze Farbpigmente in die Lackmatrix eingemischt. Als Lackmaterialien können z.B. Polyester, Polyurethane, Polyacrylate oder Polymethacrylate eingesetzt werden in Verbindung mit den für den Fachmann bekannten Lackadditiven. In einer im erfinderischen Sinne sehr zu bevorzugenden Vorgehensweise werden als färbende Partikel Ruß oder Graphitpartikel in die Bindermatrix eingemischt. Durch diese Additivierung wird bei sehr hohem Additivierungsgehalt (>20 Gew.-%), neben der vollständigen Lichtabsortion, zusätzlich eine elektrische Leitfähigkeit erzielt, so dass die erfinderischen doppelseitigen Haftklebebänder ebenfalls antistatische Eigenschaften aufweisen.

Weiterhin ist Gegenstand der Erfindung die Verwendung der erfinderischen doppelseitigen Haftklebebänder zur Verklebung oder Herstellung von optischen Flüssigkristall-Datenanzeigen (LCDs), die Verwendung zur Verklebung von LCD-Gläsern sowie Flüssigkristall-Datenanzeigen und Geräte mit Flüssigkristall-Datenanzeigen, welche ein erfindungsgemäßes Haftklebeband in ihrem Produktaufbau aufweisen. Für die Verwendung als Haftklebeband können die doppelseitigen Haftklebebänder mit einem oder zwei Trennfolien und/oder Trennpapieren abgedeckt sein. Bevorzugt werden silikonisierte oder fluorierte Folien oder Papiere, wie z.B. Glassine, HPDE oder LDPE gecoatete Papiere eingesetzt, die wiederum mit einer Releaseschicht basierend auf Silikonen oder fluorierten Polymeren versehen sind.

## Beispiele

Die Erfindung wird im Folgenden beschrieben, ohne sich durch die Wahl der Beispiele unnötig beschränken zu wollen.

Folgende Prüfmethoden wurden angewendet.

Prüfmethoden

A. Transmission

Die Transmission wurde im Wellenlängenbereich von 190 bis 900 nm mit einem Uvikon 923 der Fa. Biotek Kontron gemessen. Die Absolute Transmission wird als Wert bei 550 nm in % angegeben.

B. Pinholes

Eine handelsübliche sehr starke Lichtquelle (z.B. Overheadprojektor Typ Liesegangtrainer 400 KC Typ 649, Halogenlampe 36 V, 400 W) wird komplett lichtdicht mit einer Maske abgedeckt. Diese Maske enthält in der Mitte eine kreisrunde Öffnung mit einem Durchmesser von 5 cm. Auf diese kreisrunde Öffnung wird das doppelseitige LCD-Klebeband aufgelegt. In vollständig abgedunkelter Umgebung werden dann die Anzahl der Pinholes elektronisch oder visuell ausgezählt. Diese sind bei eingeschalteter Lichtquelle als durchscheinende Punkte erkennbar.

C. Reflektion

Der Reflektionstest wird nach DIN Norm 5063 Teil 3 durchgeführt. Als Messgerät wurde eine Ulbrechtsche Kugel Typ LMT eingesetzt. Der Reflektionsgrad wird als Summe aus gerichteten und gestreuten Lichtanteilen in % angegeben.

Polymer 1

Ein für radikalische Polymerisationen konventioneller 200 L-Reaktor wurde mit 2400 g Acrylsäure, 64 kg 2-Ethylhexylacrylat, 6,4 kg N-Isopropylacrylamid und 53,3 kg Aceton/Isopropanol (95:5) befüllt. Nach 45 Minuten Durchleiten mit Stickstoffgas unter Rühren wurde der Reaktor auf 58 °C hochgeheizt und 40 g 2,2'-Azoisobuttersäurenitril (AIBN) hinzugegeben. Anschließend wurde das äußere Heizbad auf 75 °C erwärmt und die Reaktion konstant bei dieser Außentemperatur durchgeführt. Nach 1 h Reaktionszeit wurde wiederum 40 g AIBN hinzugegeben. Nach 5 h und 10 h wurde mit jeweils 15 kg Aceton/Isopropanol (95:5) verdünnt. Nach 6 und 8 h wurden jeweils 100 g Dicyclohexylperoxydicarbonat (Perkadox 16®, Fa. Akzo Nobel) gelöst in jeweils 800 g Aceton hinzugegeben. Die Reaktion wurde nach 24 h Reaktionszeit abgebrochen und auf Raumtemperatur abgekühlt.

**Rußmasse 1**

In einem Fass wird das Polymer 1 mit Siedegrenzenbenzin auf 30 % Feststoffgehalt verdünnt. Anschließend wird unter kräftigem Rühren 8 Gew.-% Ruß (Pigmentruß; Printex™ 25, Degussa AG) bezogen auf das Polymer 1 hinzugemischt. Zur Homogenisierung wird die Lösung für 10 Minuten mit einem Ultratrurrax homogenisiert.

**Rußmasse 2**

In einem Fass wird das Polymer 1 mit Siedegrenzenbenzin auf 30 % Feststoffgehalt verdünnt. Anschließend wird unter kräftigem Rühren 10 Gew.% Ruß (Pigmentruß; Printex™ 25, Degussa AG) bezogen auf das Polymer 1 hinzugemischt. Zur Homogenisierung wird die Lösung für 10 Minuten mit einem Ultratrurrax homogenisiert.

**Rußmasse 3**

In einem Fass wird das Polymer 1 mit Siedegrenzenbenzin auf 30 % Feststoffgehalt verdünnt. Anschließend wird unter kräftigem Rühren 12 Gew.-% Ruß (Pigmentruß; Printex™ 25, Degussa AG) bezogen auf das Polymer 1 hinzugemischt. Zur Homogenisierung wird die Lösung für 10 Minuten mit einem Ultraturrax homogenisiert.

**Vernetzung**

Die Rußmassen und Polymer 1 werden aus Lösung auf ein silikonisiertes Trennpapier (PE-gecoatetes Trennpapier der Fa. Loparex) beschichtet, für 10 Minuten im Trockenschrank bei 100 °C getrocknet und anschließend mit 25 kGy Dosis bei einer Beschleunigungsspannung von 200 kV vernetzt. Der Masseauftrag betrug jeweils 50 g/$m^2$.

**Folie (Al-Bedampfung):**

Eine handelsübliche 12 μm PET-Folie der Fa. Mitsubishi RNK 12 μm wurde beidseitig mit Aluminium bedampft, bis eine vollflächige Aluminiumschicht auf beiden Seiten aufgetragen war. Die Folie wurde in einer Breite von 300 mm nach dem Sputtering-Verfahren bedampft. Hier wird positiv geladenes, ionisiertes Argongas in eine Hochvakuumkammer geleitet. Die geladenen Ionen treffen dann auf eine negativ geladenen Al-Platte und lösen auf molekularer Ebene Aluminiumpartikel ab, die sich dann auf den Polyesterfilm, der über die Platte geführt wird, ablagern.

Beispiel 1

Die Folie wird im Kaschierverfahren mit dem Polymer 1 einseitig mit 50 g/$m^2$ und auf der anderen Seite mit der Rußmasse 1 mit 50 g/$m^2$ beschichtet.

Beispiel 2

Die Folie wird im Kaschierverfahren mit dem Polymer 1 einseitig mit 50 g/$m^2$ und auf der anderen Seite mit der Rußmasse 2 mit 50 g/$m^2$ beschichtet.

Beispiel 3

Die Folie wird im Kaschierverfahren mit dem Polymer 1 einseitig mit 50 g/$m^2$ und auf der anderen Seite mit der Rußmasse 3 mit 50 g/$m^2$ beschichtet.

**Ergebnisse**

Die Beispiele 1 bis 3 wurden nach den Prüfmethoden A, B und C ausgetestet. Die Ergebnisse sind in Tabelle 1 dargestellt.

Tabelle 1

| Beispiel | Transmission (Test A) | Pinholes (Test B) | Reflektion (total) (Test C) |
|---|---|---|---|
| 1 | < 0,1 % | 0 | 86,2 % |
| 2 | < 0,1 % | 0 | 85,5 % |
| 3 | < 0,1 % | 0 | 85,8 % |

Den Ergebnissen aus Tabelle 1 kann entnommen werden, dass die Beispiele 1 bis 3 im Test (A) eine äußerst geringe Transmission von < 0,1 % aufweisen.
Im Test (B) wurde die Anzahl der Pinholes bestimmt. Für keines der genannten Beispiele konnten Pinholes gefunden werden. Weiterhin wurde die Reflektion der metallischen Seite bestimmt. In allen Fällen lag die Reflektion bei größer 85 %. Die Ergebnisse zeigen, dass sich mit den erfindungsgemäßen Klebebändern im LCD-Anwendungsfall eine hohe Lichtausbeute erzielen lässt.

**Patentansprüche**

1. Haftklebeband, insbesondere zur Herstellung oder Verklebung von optischen Flüssigkristall-Datenanzeigen (LCOs), aufweisend eine Ober- und eine Unterseite, mit lichtreflektierenden Eigenschaften auf der Oberseite und lichtabsorbierenden Eigenschaften auf der Unterseite,
weiterhin aufweisend eine Trägerfolie mit einer Ober- und einer Unterseite,
wobei das Haftklebeband beidseitig mit einer Haftklebeschicht ausgerüstet ist,
**dadurch gekennzeichnet, dass**
die Haftklebeschicht auf der Unterseite des Haftklebebandes schwarz eingefärbt ist,
eine metallisch reflektierende Beschichtung auf der Oberseite der Trägerfolie vorgesehen ist, und
die Haftklebeschicht auf der Oberseite des Haftklebebandes transparent ist.

2. Haftklebeband nach Anspruch 1, **dadurch gekennzeichnet, dass**

die Schwarzfärbung der Haftklebeschicht auf der Unterseite durch Ruß bewirkt wird, insbesondere durch Pigmentruß.

3. Haftklebeband nach Anspruch 2, **dadurch gekennzeichnet, dass** der Rußanteil in der Haftklebemasse zwischen 2 und 30 Gew.-%, bevorzugt zwischen 5 und 20 Gew.-%, sehr bevorzugt zwischen 8 und 15 Gew.-% beträgt.

4. Haftklebeband nach einem der vorangehenden Ansprüche, **gekennzeichnet durch** einen Produktaufbau mit der folgenden Schichtabfolge:

   transparente Haftklebemassenschicht (c) - metallisch reflektierende Schicht (b) - Trägerfolienschicht (a) - schwarz gefärbte Haftklebemassenschicht (c').

5. Haftklebeband nach einem der vorangehenden Ansprüche, **gekennzeichnet durch** einen Produktaufbau mit der folgenden Schichtabfolge:

   transparente Haftklebemassenschicht (c) - metallisch reflektierende Schicht (b) - Trägerfolienschicht (a) - metallisch reflektierende Schicht (b) - schwarz gefärbte Haftklebemassenschicht (c').

6. Haftklebeband nach einem der vorangehenden Ansprüche, **gekennzeichnet durch** einen Produktaufbau mit der folgenden Schichtabfolge:

   transparente Haftklebemassenschicht (c) - (insbesondere transparente) Trägerfolienschicht (a) - metallisch reflektierende Schicht (b) - schwarz gefärbte Haftklebemassenschicht (c').

7. Haftklebeband nach einem der vorangehenden Ansprüche, **gekennzeichnet durch** einen Produktaufbau mit der folgenden Schichtabfolge:

   transparente Haftklebemassenschicht (c) - metallisch reflektierende Schicht (b) - Trägerfolienschicht (a) - metallisch reflektierende Schicht (b) - schwarzfarbige Lackschicht (d) - schwarz gefärbte Haftklebemassenschicht (c').

8. Haftklebeband nach einem der vorangehenden Ansprüche, **gekennzeichnet durch** einen Produktaufbau mit der folgenden Schichtabfolge:

   transparente Haftklebemassenschicht (c) - metallisch reflektierende Schicht (b) - Trägerfolienschicht (a) - schwarzfarbige Lackschicht (d) - schwarz gefärbte Haftklebemassenschicht (c').

9. Verwendung eines Haftklebebandes nach einem der vorangehenden Ansprüche zur Herstellung oder zur Verklebung von optischen Flüssigkristall-Datenanzeigen.

10. Verwendung nach Anspruch 9 zur Verklebung von LCD-Gläsern.

11. Flüssigkristall-Datenanzeige-Gerät aufweisend ein Haftklebeband nach zumindest einem der Ansprüche 1 bis 8.

## Claims

1. Pressure-sensitive adhesive tape, in particular for the production or adhesive bonding of optical liquid-crystal displays (LCDs),
   having a top side and a bottom side, having light-reflecting properties on the top side and light-absorbing properties on the bottom side,
   further comprising a carrier film having a top side and a bottom side,
   the pressure-sensitive adhesive tape being furnished on both sides with a pressure-sensitive adhesive layer,
   **characterized in that**
   the pressure-sensitive adhesive layer on the bottom side of the pressure-sensitive adhesive tape is colored black,
   a metallically reflecting coating is provided on the top side of the carrier film, and
   the pressure-sensitive adhesive layer on the top side of the pressure-sensitive adhesive tape is transparent.

2. Pressure-sensitive adhesive tape according to claim 1, **characterized in that** the black coloring of the pressure-sensitive adhesive layer on the bottom side is brought about by carbon black, in particular by pigmentary carbon black.

3. Pressure-sensitive adhesive tape according to claim 2, **characterized in that** the carbon black fraction in the pressure-sensitive adhesive composition is between 2% and 30% by weight, preferably between 5% and 20% by weight, very preferably between 8% and 15% by weight.

4. Pressure-sensitive adhesive tape according to at least one of the preceding claims, **characterized by** a product construction featuring the following layer sequence:

   transparent pressure-sensitive adhesive layer (c) - metallically reflecting layer (b) - carrier film layer (a) - black-colored pressure-sensitive adhesive layer (c').

5. Pressure-sensitive adhesive tape according to at least one of the preceding claims, **characterized by** a product construction featuring the following layer sequence:

   transparent pressure-sensitive adhesive layer (c) - metallically reflecting layer (b) - carrier film layer (a) - metallically reflecting layer (b) - black-colored pressure-sensitive adhesive layer (c').

6. Pressure-sensitive adhesive tape according to at least one of the preceding claims, **characterized by** a product construction featuring the following layer sequence:

   transparent pressure-sensitive adhesive layer (c) - (in particular transparent) carrier film layer (a) - metallically reflecting layer (b) - black-colored pressure-sensitive adhesive layer (c').

7. Pressure-sensitive adhesive tape according to at least one of the preceding claims, **characterized by** a product construction featuring the following layer sequence:

   transparent pressure-sensitive adhesive layer (c) - metallically reflecting layer (b) - carrier film layer (a) - metallically reflecting layer (b) - black-colored paint layer (d) - black-colored pressure-sensitive adhesive layer (c').

8. Pressure-sensitive adhesive tape according to at least one of the preceding claims, **characterized by** a product construction featuring the following layer sequence:

   transparent pressure-sensitive adhesive layer (c) - metallically reflecting layer (b) - carrier film layer (a) - black-colored paint layer (d) - black-colored pressure-sensitive adhesive layer (c').

9. Use of a pressure-sensitive adhesive tape according to any one of the preceding claims for producing or for adhesively bonding optical liquid-crystal displays.

10. Use according to claim 9 for adhesively bonding LCD glasses.

11. Liquid-crystal display device comprising a pressure-sensitive adhesive tape according to at least one of claims 1 to 8.

**Revendications**

1. Ruban autoadhésif, en particulier pour la fabrication ou le collage d'afficheurs optiques d'informations à cristaux liquides (LCD),
   comportant une face supérieure et une face inférieure, à propriétés de réflexion de la lumière sur la face supérieure et propriétés d'absorption de la lumière sur la face inférieure,
   comportant en outre un film de support ayant une face supérieure et une face inférieure,
   le ruban autoadhésif étant sur les deux faces muni d'une couche autoadhésive,
   **caractérisé en ce que**
   la couche autoadhésive sur la face inférieure du ruban autoadhésif est colorée en noir,
   un revêtement métallique réfléchissant est prévu sur la face supérieure du film de support, et
   la couche autoadhésive sur la face supérieure du ruban autoadhésif est transparente.

2. Ruban autoadhésif selon la revendication 1, **caractérisé en ce que** la coloration noire de la couche autoadhésive sur la face inférieure est réalisée par du noir de carbone, en particulier par du noir de carbone pigmentaire.

3. Ruban autoadhésif selon la revendication 2, **caractérisé en ce que** la proportion de noir de carbone dans la matière autoadhésive est comprise entre 2 et 30 % en poids, de préférence entre 5 et 20 % en poids, de façon particulièrement préférée entre 8 et 15 % en poids.

4. Ruban autoadhésif selon l'une quelconque des revendications précédentes, **caractérisé par** une structure de produit présentant la succession de couches suivants :

   couche de matière autoadhésive transparente (c) - couche réfléchissante métallique (b) - couche de film de support (a) - couche de matière autoadhésive colorée en noir (c').

5. Ruban autoadhésif selon l'une quelconque des revendications précédentes, **caractérisé par** une structure de produit présentant la succession de couches suivants :

   couche de matière autoadhésive transparente (c) - couche réfléchissante métallique (b) - couche de film de support (a) - couche réfléchissante métallique (b) - couche de matière autoadhésive colorée en noir (c').

6. Ruban autoadhésif selon l'une quelconque des revendications précédentes, **caractérisé par** une structure de produit présentant la succession de couches suivants :

   couche de matière autoadhésive transparente (c) - couche de film de support (en particulier transparente) (a) - couche réfléchissante métallique (b) - couche de matière autoadhésive colorée en noir (c').

7. Ruban autoadhésif selon l'une quelconque des revendications précédentes, **caractérisé par** une structure de produit présentant la succession de couches suivants :

   couche de matière autoadhésive transparente (c) - couche réfléchissante métallique (b) - couche de film de support (a) - couche réfléchissante métallique (b) - couche de peinture de couleur noire (d) - couche de matière autoadhésive colorée en noir (c').

8. Ruban autoadhésif selon l'une quelconque des revendications précédentes, **caractérisé par** une structure de produit présentant la succession de couches suivants :

   couche de matière autoadhésive transparente (c) - couche réfléchissante métallique (b) - couche de film de support (a) - couche de peinture de couleur noire (d) - couche de matière autoadhésive colorée en noir (c').

9. Utilisation d'un ruban autoadhésif selon l'une quelconque des revendications précédentes, pour la fabrication ou pour le collage d'afficheurs optiques d'informations à cristaux liquides.

10. Utilisation selon la revendication 9, pour le collage de verres de LCD.

11. Appareil à afficheur d'informations à cristaux liquides, comprenant un ruban autoadhésif selon au moins l'une des revendications 1 à 8.

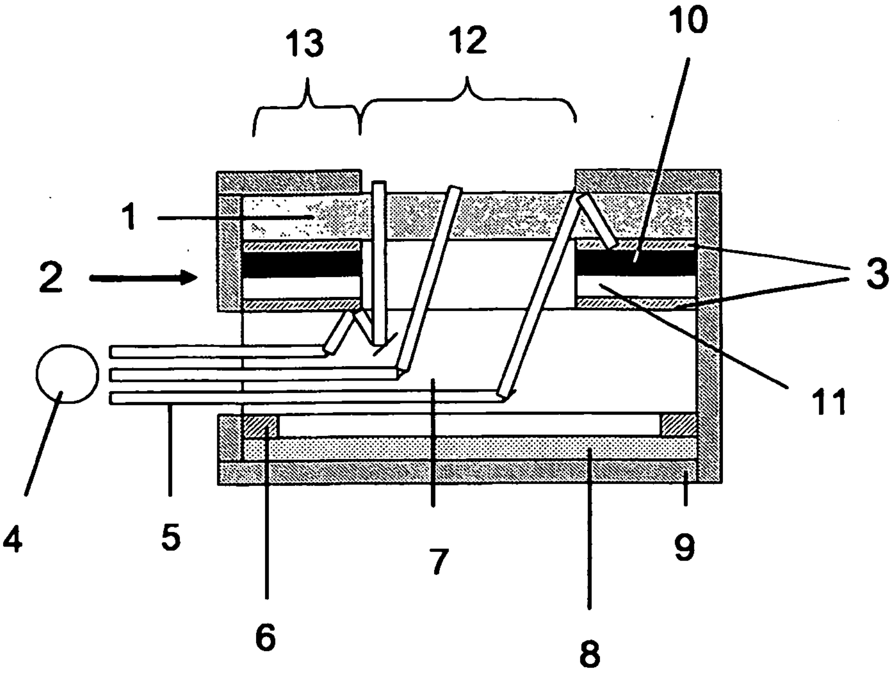


Fig. 1

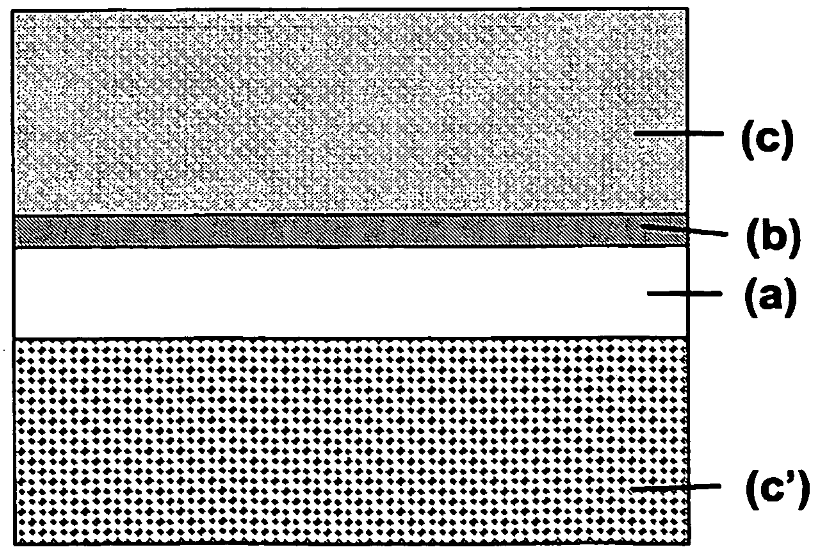


Fig. 2

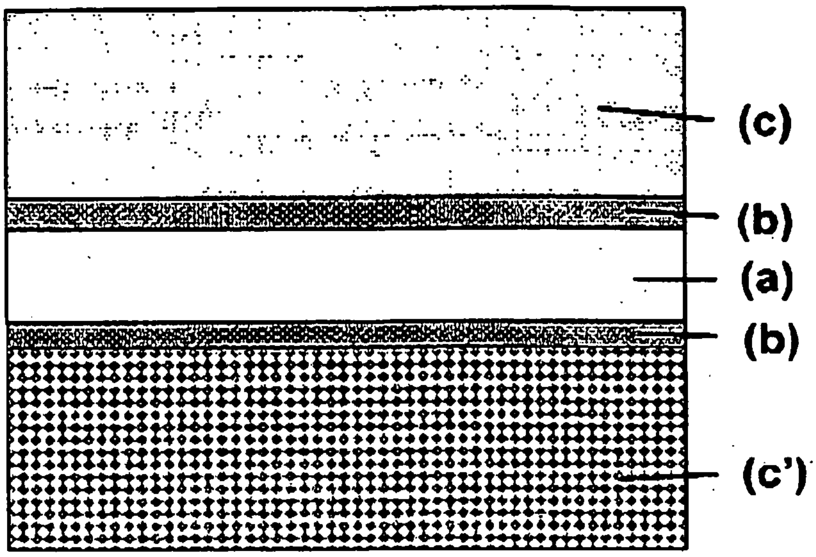


Fig. 3

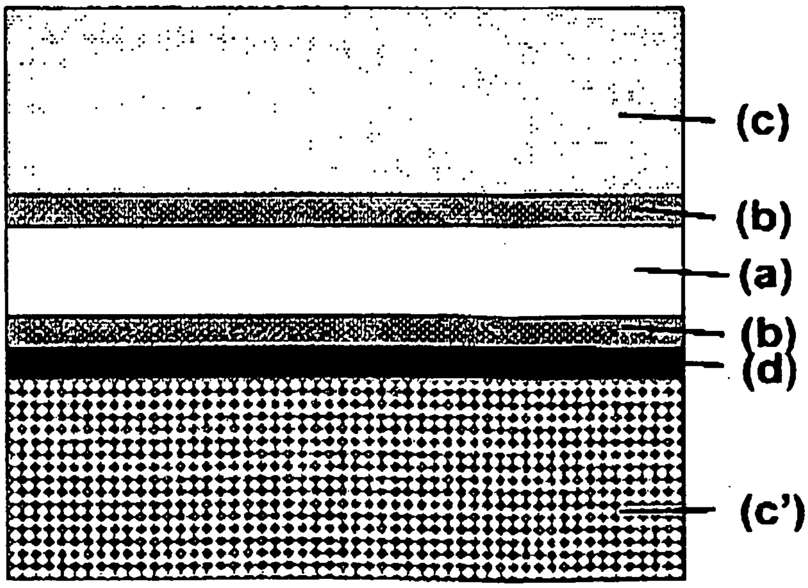


Fig. 4

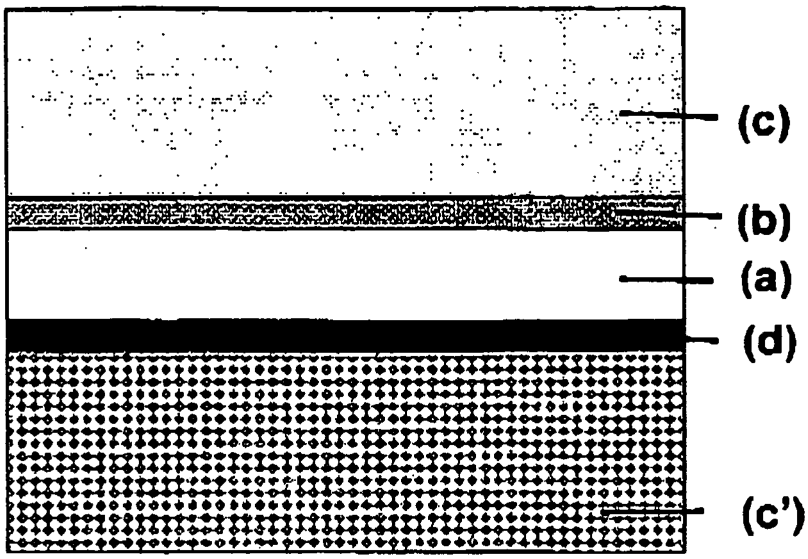


Fig. 5

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2002350612 A
- JP 2002023663 A
- JP 2004184443 A
- EP 1386950 A
- DE 10243215 A
- WO 9801478 A1
- US 4581429 A
- WO 9813392 A1
- EP 735052 A1
- WO 9624620 A1
- WO 9844008 A1
- DE 19949352 A1
- EP 0824111 A1
- EP 826698 A1
- EP 824110 A1
- EP 841346 A1
- EP 850957 A1
- US 5945491 A
- US 5854364 A
- US 5789487 A


### In der Beschreibung aufgeführte Nicht-Patentliteratur


- Photoinititation, Photopolymerization and Photocuring: Fundamentals and Applications. Hanser-Verlag, 1995
- Chemistry and Technology of UV and EB Formulation for Coatings, Inks and Paints. **Ergänzend kann Carroy et al.** Oldring (Hrsg.). SITA, 1994
- **von Donatas Satas.** Handbook of Pressure Sensitive Adhesive Technology. 1989
- **T.G. Fox.** *Bull. Am. Phys. Soc.,* 1956, vol. 1, 123
- **Houben Weyl.** Methoden der Organischen Chemie. vol. E 19a, 60-147
- **Hawker.** Beitrag zur Hauptversammlung. American Chemical Society, 1997
- **Husemann.** Beitrag zum IUPAC World-Polymer Meeting. 1998
- Chemistry and Technology of UV and EB formulation for Coatings. Inks and Paints. SITA, 1991, vol. 1